(19) Europäisches Patentamt

European Patent Office

Office européen des brevets

(11) Veröffentlichungsnummer : **0 411 421 B1**

## (12) EUROPÄISCHE PATENTSCHRIFT

(45) Veröffentlichungstag der Patentschrift :
**16.12.92 Patentblatt 92/51**

(21) Anmeldenummer : **90114025.1**

(22) Anmeldetag : **21.07.90**

(51) Int. Cl.⁵ : **B01D 39/12**, B01D 46/12, B01D 25/02, B23K 11/00

(54) Verfahren zur Herstellung eines Filters und danach hergestellter Filter.

(30) Priorität : **02.08.89 DE 3925596**

(43) Veröffentlichungstag der Anmeldung :
**06.02.91 Patentblatt 91/06**

(45) Bekanntmachung des Hinweises auf die
Patenterteilung :
**16.12.92 Patentblatt 92/51**

(84) Benannte Vertragsstaaten :
**AT BE DE ES FR IT NL SE**

(56) Entgegenhaltungen :
**DE-A- 1 924 836**
**DE-A- 2 258 906**
**DE-A- 2 720 278**
**DE-A- 3 330 020**

(73) Patentinhaber : **Schwäbische Hüttenwerke
Gesellschaft mit beschränkter Haftung
Wilhelmstrasse 67 Postfach 3280
W-7080 Aalen-Wasseralfingen (DE)**

(72) Erfinder : **Härle, Hans A., Dipl.-Ing.
Röttingerstrasse 38
W-7085 Bopfingen (DE)**

(74) Vertreter : **Lorenz, Werner, Dipl.-Ing.
Fasanenstrasse 7
W-7920 Heidenheim (DE)**

EP 0 411 421 B1

Jouve, 18, rue Saint-Denis, 75001 PARIS

**Beschreibung**

Die Erfindung betrifft ein Verfahren zur Herstellung eines Filters für flüssige oder gasförmige Medien, insbesondere für Abgase von Verbrennungsmotoren, der aus einer oder mehreren Platten aus einem Geflecht oder Gewirk von Metalldrähten gebildet wird, wobei die Drähte aneinandergedrückt werden und anschließend wenigstens eine teilweise Verbindung der Drähte untereinander erfolgt. Die Erfindung betrifft auch einen danach hergestellten Filter.

Es sind bereits Filter bekannt, die aus mehreren Schichten bzw. Lagen von Metallfasern bestehen, die zusammengesintert werden (s. z.B. DE-A-1 924 836). Das Sintern erfolgt dabei in der Regel in einem Ofen unter Druck und bei entsprechend hoher Temperatur, wobei gleichzeitig auch für ein Vakuum zu sorgen ist.

Nachteilig dabei ist jedoch, daß dieses Verfahren relativ teuer ist und häufig - in Abhängigkeit von dem zu filternden Medium - auch das Problem besteht, daß sich der Filter zusetzt. Entweder muß dann der Filter ausgetauscht oder in aufwendiger Weise gereinigt werden.

Der vorliegenden Erfindung liegt daher die Aufgabe zugrunde, ein Verfahren zur Herstellung eines Filters und einen Filter zu schaffen, der einfach in der Herstellung ist und der eine gute Filterleistung besitzt.

Erfindungsgemäß wird diese Aufgabe dadurch gelöst, daß eine Platte aus mehreren Lagen von Drähten zwischen die Elektroden einer Widerstandsschweißeinrichtung gebracht wird und anschließend eine Widerstandsverschweißung zur wenigstens teilweisen Verbindung der Drähte untereinander erfolgt.

Ein auf diese Weise hergestellter Filter läßt sich wesentlich einfacher und kostengünstiger als bekannte Filter herstellen. Dabei kann die Herstellung in einem Arbeitsgang erfolgen, und zwar mit Widerstandsschweißgeräten oder Einrichtungen von ggf. bekannter Bauart. Bei der Widerstandsverschweißung werden die einzelnen Drähte im wesentlichen lediglich punktförmig miteinander verschweißt. Dadurch bilden sie einerseits zwar eine kompakte Einheit, andererseits ist jedoch eine hohe Durchflußleistung gewährleistet, denn es steht eine Vielzahl von Poren bzw. Öffnungen für den Filtervorgang zur Verfügung.

In einfacher Weise kann man nach der Widerstandsverschweißung die Platte in die gewünschte Filterform bringen und ggf. mit mehreren zu einer Filtereinheit verbinden.

In einer Weiterbildung der Erfindung ist vorgesehen, daß die einzelnen Lagen aus unterschiedlich starken Drähten bestehen. Durch diese Maßnahme, die problemlos bei dem erfindungsgemäßen Herstellungsverfahren durchgeführt werden kann, lassen sich die Filter jeweils optimal auf die an sie gestellten Anforderungen und Einsatzgebiete abstimmen. So können z.B. im Bereich der Eintrittsseite dünnere bzw. feinere Drähte verwendet werden, wodurch insbesondere bei einem gasförmigen Medium Partikel bereits an der Oberfläche zurückgehalten werden können und nur ein sehr geringer Teil der Partikel überhaupt in das Filtermedium eindringt. Diese Maßnahme hat den Vorteil, daß dadurch eine Reduzierung der Filterleistung vermieden wird, wie dies beim Stand der Technik durch ein Zusetzen des Filters mit entsprechenden Partikeln der Fall ist. Andererseits ergeben gröbere bzw. stärkere Drähte im mittleren Bereich und/oder im Bereich der Austrittsseite eine entsprechende Festigkeit für die Platte.

Selbstverständlich läßt sich im Bedarfsfalle jedoch auch jede andere Drahtstärkenkombination verwenden.

In einfacher Weise lassen sich bei dem erfindungsgemäßen Verfahren auch Drähte unterschiedlicher Materialzusammensetzungen und/oder unterschiedlicher Beschichtungen miteinander verschweißen, wodurch der Anwendungsbereich des erfindungsgemäßen Filters weiter vergrößert wird. Insbesondere können dadurch unterschiedliche Wirkungen auf das zu filternde Medium ausgeübt werden. So können z.B. katalytische Wirkungen erzielt werden, was insbesondere für die Reinigung von Abgasen von Verbrennungsmotoren von großem Vorteil ist. Auf diese Weise können z.B. neben Rußpartikeln aus einem Dieselmotor auch andere umweltschädliche Bestandteile, wie z.B. Kohlenmonoxyd, Kohlenwasserstoffe und Stickoxyde, aus dem Abgas entfernt werden. Hierzu ist es lediglich erforderlich, wenigstens einzelne Lagen der Platte mit Beschichtungen aus Platin, Rhodium, Vanadium oder einem anderen katalytisch wirkenden Werkstoff zu versehen.

In einer weiteren sehr vorteilhaften Weiterbildung der Erfindung kann vorgesehen sein, daß auf die einzelnen Lagen oder deren Drähte pulverförmige, körnige oder spanförmige Partikel, vorzugsweise durch einen Sintervorgang, aufgebracht werden.

Durch die zusätzlich aufgebrachten Partikel wird die Abscheidewirkung deutlich erhöht. Durch die Partikel wird eine deutliche Oberflächenvergrößerung erreicht, womit eine vielfach größere Adsorbtionsfläche und damit eine wesentlich größere Abscheidefläche zur Verfügung steht. Bei gleicher Filterleistung kann damit z.B. die Dicke der einzelnen Filterlagen deutlich reduziert werden.

Ein weiterer Vorteil durch das Aufbringen der Partikel liegt darin, daß man im Bedarfsfalle je nach dem vorgesehenen Anwendungszweck auch die aufzubringenden Partikel entsprechend wählen kann. Diese können z.B. aus Metall, aus Kunststoff oder aus keramischen Stoffen oder auch aus Mischungen daraus bestehen.

Bei einem Einsatz als Katalysatorkörper wird man z.B. Partikel verwenden, die katalytische Eigenschaften besitzen, wie z.B. Platin, Rhodium oder Vanadium.

Die Partikel selbst können auf beliebige Weise in die Platten eingebracht werden. So können sie z.B. durch eine klebrige Trägerflüssigkeit eingebracht werden, ebenso ist ein Einrütteln möglich oder eine Einbringung durch eine elektrische und/oder magnetische Aufladung der Lagen und einer anschließenden Dotierung mit den Partikeln.

Im Bedarfsfalle kann der Sintervorgang so gewählt werden, daß neben einer Aufsinterung der einzelnen Partikel auf den Lagen bzw. Drähten die Drähte untereinander auch punktuell untereinander noch versintert werden und auf diese Weise eine stabilere Einheit bilden.

Die Widerstandsverschweißung der Drähte untereinander kann auf verschiedene Weise erfolgen.

Stellt man Platten einer bestimmten Größe her, so kann man für eine Herstellung in einem Arbeitsgang Elektroden vorsehen, die wenigstens annähernd so groß sind wie die zu bildende Platte. Bringt man dann die zu verschweißende Platte zwischen die beiden Elektroden, nähert die Elektroden einander an und verpreßt die einzelnen Lagen, so kann in einem Arbeitsgang eine Platte bestimmter Größe hergestellt werden.

In gleicher Weise ist auch die Herstellung von mehreren Platten aus einem Band möglich, das dann schritt- oder taktweise zwischen den Elektroden durchgeschoben wird. Auf diese Weise kann man durch ein entsprechendes Abtrennen einzelner Platten von dem Band beliebig große Platten erhalten.

Bildet man die Elektroden als rotierende Walzen aus, so läßt sich ein Band beliebiger Länge in einem kontinuierlichen Vorgang bilden, wozu dieses lediglich unter Druck zwischen den beiden sich gegenüberliegenden Walzen durchgezogen werden muß.

Eine sehr vorteilhafte und nicht naheliegende Weiterbildung der Erfindung besteht darin, daß die Drähte vor der Widerstandsverschweißung aus ihrer, im allgemeinen runden, Querschnittsform, in eine fläche Form gedrückt werden und zwar vorzugsweise in eine wenigstens annähernd rechteckige Form. Auf diese Weise gewinnt man eine erhebliche Oberflächenvergrößerung und damit größere Filterfläche und daraus wieder resultierend eine höhere Filterleistung. Dies kann dabei mit geringem Aufwand erreicht werden.

Eine weitere Erhöhung der Filterleistung ergibt sich, wenn vorgesehen ist, daß die flachgedrückten Ober flächen noch profiliert werden. So kann man z.B. eine Wellenform eindrücken, womit die Oberfläche noch größer wird.

Nachfolgend sind Ausführungsbeispiele der Erfindung anhand der Zeichnung prinzipmäßig beschrieben.

Es zeigt:

Fig. 1: eine Filterplatte in einer Widerstandsschweißeinrichtung

Fig. 2: die Herstellung von Filterplatten in einem kontinuierlichen Herstellungsvorgang

Fig. 3: eine vergrößerte Darstellung eines deformierten Drähtes im Querschnitt.

Die Fig. zeigt schematisch die Herstellung einer einzelnen Filterplatte in einer Widerstandsschweißeinrichtung 1 mit einer positiven Elektrode 2 und einer negativen Elektrode 3 jeweils in Plattenform. Die beiden Platten 2 und 3 besitzen eine Größe, die der Größe der herzustellenden und zwischen den beiden Elektroden liegenden Filterplatte 4 entspricht. Die Filterplatte 4 besteht aus mehreren Lagen 6 von Einzeldrähten 5, die jeweils in jeder Lage durch Längs- und Querdrähte zu einem Geflecht bzw. Gewirk miteinander verbunden sind.

Nähert man nun die beiden Elektrodenplatten 2 und 3 einander an und übt auf die dazwischenliegende Platte 4 durch die Elektrodenplatten 2 und 3 einen Druck aus, wobei gleichzeitig die Widerstandsverschweißung erfolgt, so verbinden sich die einzelnen Drähte 5 in den Lagen miteinander zu einer festen Einheit, die anschließend in die gewünschte Filterform gebracht werden kann.

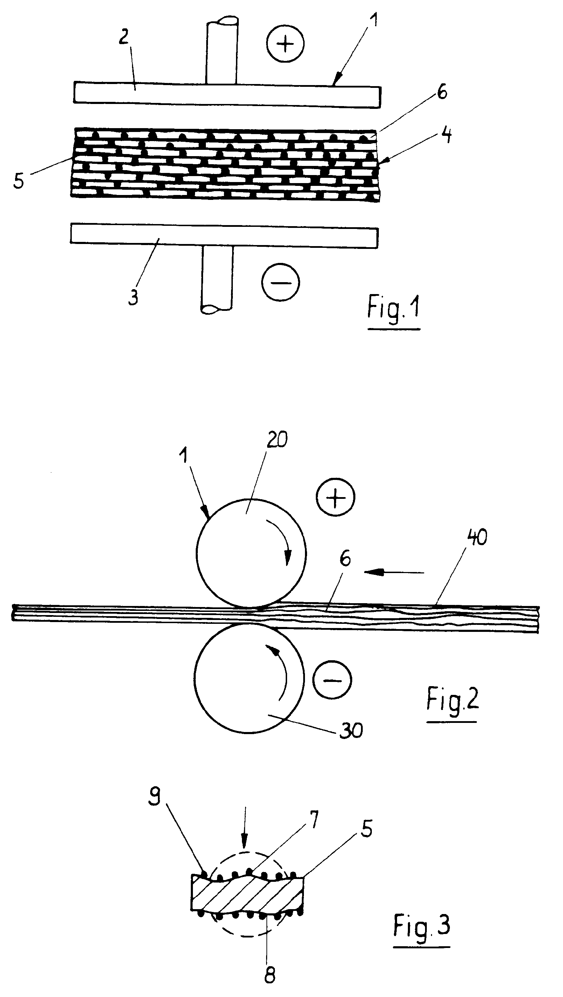

In der Fig. 2 ist ein Herstellungsverfahren von Platten 4 aus einem kontinuierlich zwischen zwei Elektrodenwalzen 20 und 30 unter Verpressung in Pfeilrichtung durchgeschobenen Band 40 dargestellt. Das Band ist ebenfalls aus mehreren Lagen 6 mit Längs- und Querdrähten aufgebaut, wobei als einziger Unterschied zu dem in der Fig. 1 dargestellten Herstellungsverfahren anschließend von dem Band Filterplatten in der gewunschten Größe und Form abgetrennt werden können.

Die Fig. 3 zeigt die Form eines Einzeldrahtes 5, der aus einem Draht mit einem runden Querschnitt (gestrichelt dargestellt) in eine im wesentlichen rechteckige Form vor der Widerstandsverschweißung gebracht worden ist. Dies kann auf beliebige Weise erfolgen. Wie aus der Fig. 3 weiter ersichtlich ist, sind die wirksamen Filteroberflächen 7 und 8 als Einström- und ggf. Ausströmseiten (siehe Pfeilrichtung) noch wellenförmig profiliert, wodurch sich eine weitere Oberflächenvergrößerung ergibt.

In der Fig. 3 ist auch durch Punkte eine Dotierung der Lagen 6 bzw. deren Einzeldrähte 5 mit kleinen Partikeln 9 dargestellt, welche auf die Filteroberflächen 7 und 8 aufgebracht werden, z.B. durch ein "Einschwemmen" mittels einer klebrigen Flüssigkeit. Die Verbindung der Partikel 9 mit den Einzeldrähten 5 kann durch einen Sintervorgang in an sich bekannter Weise erfolgen.

**Patentansprüche**

1. Verfahren zur Herstellung eines Filters für flüssige oder gasförmige Medien, insbesondere für Abgase von Verbrennungsmotoren, der aus einer oder mehreren Platten (4) aus einem Geflecht oder Gewirk von Metalldrähten (5) gebildet wird, wobei die Drähte (5) aneinandergedrückt werden und anschließend wenigstens eine teilweise Verbindung der Drähte untereinander erfolgt, **dadurch gekennzeichnet**, daß wenigstens eine Platte (4) aus mehreren Lagen (6) von Drähten (5) zwischen die Elektroden (2,3 bzw. 20,30) einer Widerstandsschweißeinrichtung gebracht wird, und anschließend eine Widerstandsverschweißung zur wenigstens teilweisen Verbindung der Drähte untereinander erfolgt.

2. Verfahren nach Anspruch 1, **dadurch gekennzeichnet**, daß die Platte (4) nach der Widerstandsschweißung in die gewünschte Filterform umgeformt wird.

3. Verfahren nach Anspruch 1 oder 2, **dadurch gekennzeichnet**, daß auf die einzelnen Lagen (6) oder deren Drähte (5) pulverförmige, körnige oder spanförmige Partikel (9) aufgebracht werden.

4. Verfahren nach Anspruch 3, **dadurch gekennzeichnet**, daß die Partikel (9) aufgesintert werden.

5. Verfahren nach einem der Ansprüche 1 - 4, **dadurch gekennzeichnet**, daß die Drähte (5) vor der Widerstandsverschweißung flachgedrückt werden.

6. Verfahren nach Anspruch 5, **dadurch gekennzeichnet**, daß die Drähte (5) wenigstens annähernd in eine Rechteckform gebracht werden und/oder die flachgedrückten Oberflächen der Drähte (5) profiliert werden.

7. Verfahren nach einem der Ansprüche 1 - 6, **dadurch gekennzeichnet**, daß die Elektroden (2,3) der Widerstandsschweißeinrichtung (1) wenigstens annähernd so groß sind wie die zu bildende Platte (4).

8. Verfahren nach einem der Ansprüche 1 - 7, **dadurch gekennzeichnet**, daß die Platten (4) in Form von Bändern (40) gebildet werden, die schrittweise zwischen den Elektroden (20,30) der Widerstandsschweißeinrichtung (1) durchgeschoben werden.

9. Verfahren nach einem der Ansprüche 1 - 8, **dadurch gekennzeichnet**, daß die Elektroden (20,30) der Widerstandsschweißeinrichtung (1) als sich drehende Walzen ausgebildet sind, zwischen denen die Platten (40) in Form eines Bandes kontinuierlich durchgeschoben werden.

10. Filter für flüssige oder gasförmige Medien, insbesondere für Abgase von Verbrennungsmotoren, der aus einer oder mehreren Platten aus einem Geflecht oder Gewirk von aneinander gedrückten Metalldrähten gebildet ist, **dadurch gekennzeichnet**, daß die Platte bzw. die Platten (4) aus mehreren Lagen (6) von durch eine Widerstandsschweißeinrichtung (1) teilweise miteinander verbundenen Metalldrähten (5) bestehen.

11. Filter nach Anspruch 10, **dadurch gekennzeichnet**, daß in der Platte (4) unterschiedlich starke Drähte und/oder Drähte (5) unterschiedlicher Materialien oder unterschiedlicher Beschichtungen vorhanden sind.

12. Filter nach Anspruch 11, **dadurch gekennzeichnet**, daß die der Eintrittsseite des Filters zugewandten Drähte (5) einen geringeren Durchmesser besitzen als die Drähte im mittleren Bereich der Platte (4) und/oder im Bereich der Austrittsseite.

13. Filter nach Anspruch 10, 11 oder 12, **dadurch gekennzeichnet**, daß die Drähte (5) von der Kreisform abweichen und eine wenigstens angenäherte Rechteckform besitzen.

14. Filter nach Anspruch 12 oder 13, **dadurch gekennzeichnet**, daß die Oberflächen der flachgedrückten Drähte (5) profiliert sind.

## Claims

1. Process for the production of a filter for liquid or gaseous media, especially for the exhaust gases from combustion engines, formed by one or more plates (4) consisting of a mesh or knitted fabric of metal wires (5), the wires (5) being pressed together and then the wires being at least partially connected to one another, characterised in that at least one plate (4) consisting of several layers (6) of wires (5) is brought between the electrodes (2, 3 or 20, 30) of a resistance welding set and then the wires are at least partially connected to one another by resistance welding.

2. Process according to claim 1, characterised in that the plate (4) is transformed into the desired filter shape after resistance welding.

3. Process according to claim 1 or claim 2, characterised in that pulverulent, granular or chip-like particles (9) are applied to the individual layers (6) or the wires (5) thereof.

**4.** Process according to claim 3, characterised in that the particles (9) are sintered.

**5.** Process according to one of claims 1 - 4, characterised in that the wires (5) are flattened prior to resistance welding.

**6.** Process according to claim 5, characterised in that the wires (5) are formed into an at least approximately rectangular shape and/or the flattened surfaces of the wires (5) are profiled.

**7.** Process according to one of claims 1 - 6, characterised in that the electrodes (2, 3) of the resistance welding set (1) are at least approximately as large as the plate (4) to be formed.

**8.** Process according to one of claims 1 - 7, characterised in that the plates (4) are produced in the form of strips (40) which are pushed gradually between the electrodes (20, 30) of the resistance welding set (1).

**9.** Process according to one of claims 1 - 8, characterised in that the electrodes (20, 30) of the resistance welding set (1) are designed as rotating rolls between which the plates (40) are pushed in the form of a continuous strip.

**10.** Filter for liquid or gaseous media, especially for the exhaust gases from combustion engines, formed by one or more plates consisting of a mesh or knitted fabric of metal wires pressed together, characterised in that the plate or plates (4) consist(s) of several layers (6) of metal wires (5) partially connected to one another by a resistance welding set (1).

**11.** Filter according to claim 10, characterised in that wires (5) of different thicknesses and/or wires (5) of different materials or having different coatings are present in the plate (4).

**12.** Filter according to claim 11, characterised in that the wires (5) directed towards the inlet side of the filter have a smaller diameter than the wires in the centre region of the plate (4) and/or in the region of the outlet side.

**13.** Filter according to claim 10, claim 11 or claim 12, characterised in that the wires (5) deviate from a circular shape and have an at least approximately rectangular shape.

**14.** Filter according to claim 12 or claim 13, characterised in that the surfaces of the flattened wires (5) are profiled.

**Revendications**

**1.** Procédé de fabrication d'un filtre pour des fluides liquides ou gazeux, notamment pour des gaz d'échappement de moteurs à combustion, lequel est formé d'une ou plusieurs plaques (4) faites d'un entrelacs ou de mailles en fils métalliques (5), où l'on presse les fils (5) les uns contre les autres et ensuite on fixe au moins partiellement les fils entre eux,
cactérisé en ce qu'au moins une plaque (4) faite de plusieurs couches (6) de fils (5) est mise entre les électrodes (2, 3; 20, 30) d'un appareil à souder par résistance, et qu'ensuite on effectue un soudage par résistance pour fixer au moins partiellement les fils entre eux.

**2.** Procédé selon la revendication 1, **caractérisé** en ce que la plaque (4), après le soudage par résistance, est façonnée à la forme voulue du filtre.

**3.** Procédé selon la revendication 1 ou 2, **caractérisé** en ce que des particules (9) sous forme de poudre, de grains ou de copeaux sont appliquées sur les diverses couches (6) ou sur leurs fils (5).

**4.** Procédé selon la revendication 3, **caractérisé** en ce que lesdites particules (9) sont soumises à un frittage.

**5.** Procédé selon l'une des revendications 1 à 4, **caractérisé** en ce que les fils (5) sont aplatis par pressage à plat avant le soudage par résistance.

**6.** Procédé selon la revendication 5, **caractérisé** en ce que les fils (5) sont mis sous une forme au moins approximativement rectangulaire et/ou en ce que les surfaces aplaties des fils (5) sont profilées.

**7.** Procédé selon l'une des revendications 1 à 6, **caractérisé** en ce que les électrodes (2, 3) de l'appareil à souder par résistance (1) sont au moins approximativement aussi grandes que la plaque (4) à former.

**8.** Procédé selon l'une des revendications 1 à 7, **caractérisé** en ce que les plaques (4) sont formées en forme de bandes (40) qui passent pas à pas entre les électrodes (20, 30) de l'appareil à souder par résistance (1).

**9.** Procédé selon l'une des revendications 1 à 8, **caractérisé** en ce que les électrodes (20, 30) de l'appareil à souder par résistance (1) sont constituées par des cylindres rotatifs entre lesquels les plaques (40) passent en continu sous la forme d'une bande.

10. Filtre pour des fluides liquides ou gazeux, notamment pour des gaz d'échappaient de moteurs à combustion, formé d'une ou plusieurs plaques faites d'un entrelacs ou de mailles en fils métalliques pressés les uns contre les autres, **caractérisé** en ce que la ou les plaques (4) comportent plusieurs couches (6) de fils métalliques (5) fixés au moins partiellement les uns aux autres au moyen d'un appareil à souder par résistance (1).

11. Filtre selon la revendication 10, **caractérisé** en ce que la plaque (4) contient des fils de différentes grosseurs et/ou des fils (5) faits de différents matériaux ou pourvus de différents revêtements.

12. Filtre selon la revendication 11, **caractérisé** en ce que les fils (5) situés du côté de l'entrée du filtre ont un plus petit diamètre que les fils situés dans la zone médiane de la plaque (4) et/ou dans la zone du côté de la sortie

13. Filtre selon la revendication 10, 11 ou 12, **caractérisé** en ce que les fils (5) ont une forme non circulaire, au moins approximativement rectangulaire.

14. Filtre selon la revendication 12 ou 13, **caractérisé** en ce que les surfaces des fils (5) aplatis par pressage sont profilées.

_Fig. 1_

_Fig. 2_

_Fig. 3_